# FASCICULE DE BREVET EUROPEEN

(11) **EP 1 936 244 B1**
(45) Date de publication et mention de la délivrance du brevet: **30.06.2010**
(21) Numéro de dépôt: 07121611.3
(22) Date de dépôt: 27.11.2007
(51) Int. Cl.: F16J 1/09, F16J 9/06, F16J 9/22, F16J 9/28, F02F 3/22

(54) **Piston de moteur à combustion interne muni d'un système d'étanchéité monobloc**
Kolben für einen Verbrennungsmotor mit einem einteiligen Dichtungssystem
Piston of an internal combustion engine equipped with a single-piece sealing system

(30) Priorité: 19.12.2006 FR 0655617
(43) Date de publication de la demande: 25.06.2008
(73) Titulaire: PEUGEOT CITROËN AUTOMOBILES SA, 78140 Velizy-Villacoublay (FR)
(72) Inventeur: Noiret, Christian, 78230 Le Pecq (FR)
(74) Mandataire: Ménès, Catherine

(56) Documents cités:
- CH-A- 450 082
- DE-U1- 29 717 394
- FR-E- 68 189
- JP-A- 63 018 170
- US-A- 2 563 853
- US-A- 4 907 545

## Description

Le domaine technique de l'invention concerne les pistons destinés à coulisser de façon alternative dans un cylindre de moteur à combustion interne de véhicule automobile, lesdits pistons possédant un dispositif d'étanchéité comprenant au moins un segment. Plus spécifiquement, l'invention porte sur des pistons dotés de dispositifs d'étanchéité mettant en oeuvre une combinaison de joints et de segments , dont l'agencement particulier va permettre d'élaborer un système monobloc, capable d' assurer, de façon autonome et bien maîtrisée, les fonctions d'étanchéité habituellement dévolues aux segments traditionnellement implantés sur les cylindres.
Ceux-ci sont en général de trois types :
Un premier segment dit « coupe feu » qui assure l'arrêt du flux thermique et d'une grande partie de la pression cylindre
Un deuxième qui assure l'étanchéité la plus complète possible.
Un troisième dit « racleur » qui assure le raclage de l'huile présente sur le cylindre afin que celle-ci ne remonte pas vers la chambre de combustion.
Cette technologie est éprouvée depuis plusieurs décennies elle présente toutefois quelques inconvénients :
L'étanchéité n'est pas parfaite à la fois de la chambre vers le bas moteur et vice versa.
   - Dans le premier cas ce défaut génère des gaz de blow by et une possible descente de
      carburant vers le bas moteur.
   Ces gaz nécessitent un circuit de décantation sur le moteur afin de condenser l'huile avant de les faire aspirer à nouveau par le moteur. Ces circuits représentent un coût et un volume sur le moteur de plus en plus difficile à trouver.
   Le carburant descendant vers le bas moteur génère de la dilution d'huile qui peut à terme entrainer la casse du moteur par la perte du pouvoir lubrifiant. Dans l'état de la technique actuel, on limite les intervalles de vidange pour éviter la destruction du moteur.
• Dans le deuxième cas, ce défaut génère une consommation d'huile.
   Si la consommation d'huile est excessive elle va générer pour le client le besoin de compléter le niveau d'huile, qui est considéré par celui-ci comme un défaut, donc une source de mécontentement.
   Un autre inconvénient de la technologie actuelle est le niveau de frottement et donc de perte mécanique générée.
   En effet, la géométrie du cylindre n'est pas parfaite elle présente des défauts de cylindricité qui ont des origines structurelle (géométrie du bloc, efforts, ....) et thermique (la température des pièces évolue avec la puissance du moteur)
   Pour compenser ces défauts géométriques, il est nécessaire d'introduire un effort de plaquage des segments sur le cylindre, qui génère donc des frottements.
   Par ailleurs, pour des raisons techniques, les segments sont réalisés par un anneau coupé qui permet, d'une part, une grande extension pour en assurer la mise en place dans la gorge, et, d'autre part, une capacité à absorber toutes les conditions thermiques de fonctionnement (du démarrage à froid à -30°C, à la pleine charge à chaud avec des températures de pièces entre 150°C et 200°C)
   La coupe du segment représente donc l'avantage d'assurer le montage et l'étanchéité dans toute la plage thermique de fonctionnement mais apporte l'inconvénient de présenter une fuite aux gaz et à l'huile.

Les pistons dotés de segments d'étanchéité existent déjà et ont fait l'objet de brevet. On peut, par exemple, citer les brevets FR 2567607 et FR 2660698 qui se rapportent à des pistons munis de segments monobloc en matériau métallique ou non métallique. On peut également citer le brevet US 2,563,853 qui est considéré comme représentant l'état de la technique le plus proche. L'inconvénient majeur de ces solutions est qu'elles nécessitent des pistons assemblés, pouvant donc être démontés, afin d'assurer la mise en place du segment monobloc.
Par ailleurs ces solutions ont été développées sur des moteurs industriels fonctionnant quasiment en point fixe, sans problématique de démarrage dans toutes les conditions thermiques (problèmes de dilatation différentielle).
Ces solutions pertinentes en termes d'étanchéité ne sont toutefois pas adaptées aux moteurs automobiles, dont les pistons sont de petites dimensions et très sollicités thermiquement.

Les pistons selon l'invention possèdent un dispositif d'étanchéité permettant de résoudre tous les problèmes précités.

La présente invention a pour objet un piston destiné à coulisser de façon alternative dans un cylindre de moteur à combustion interne de véhicule automobile, ledit piston possédant un dispositif d'étanchéité comprenant au moins un segment. La principale caractéristique d'un piston selon l'invention, est qu'il comprend un joint d'étanchéité dynamique coopérant avec un joint d'étanchéité statique, ces deux joints étant non métalliques et étant placés entre deux segments métalliques de maintien, de sorte que lesdits joints et lesdits segments forment un système d'étanchéité, annulaire et monobloc. De cette manière, le système d'étanchéité peut se manipuler de façon autonome pour être monté sur le piston, et il permet donc une grande souplesse d'utilisation. En outre, ledit système étant constitué d'une pluralité de composants au contact les uns des autres, il permet de concentrer plusieurs fonctions sur un volume d'encombrement réduit. En effet, dans les conditions de démarrage à froid à -30°C, le jeu piston/chemise est très élevé et le seul joint non métallique ne pourrait supporter la pression sans risquer de fluer dans le jeu. La mise en place du segment métallique, qui est fortement extensible, permet de garantir un maintien mécanique parfait pour éviter le fluage. Cet avantage est conservé à chaud, car le segment métallique permet toujours d'éviter le fluage en annulant en permanence le jeu radial entre le segment d'étanchéité dynamique et son support mécanique.
Par ailleurs la souplesse des joints non métalliques permet de parfaitement épouser la forme du cylindre, quelque soit l'ordre de la déformée, garantissant l'étanchéité parfaite entre le joint et la chemise. Le joint d'étanchéité statique permet, quant à lui, non seulement d'assurer l'étanchéité parfaite entre le joint dynamique et le piston, mais aussi d'assurer un effort de plaquage dans toutes les conditions d'utilisation.

De façon préférentielle, le joint d'étanchéité dynamique et en polymère, et le joint d'étanchéité statique et en élastomère de type hydrocarbure fluoré. Ainsi, le joint d'étanchéité dynamique est plus apte à la déformation élastique que ne l'est le joint d'étanchéité statique, ledit joint d'étanchéité statique offrant une bonne résistance à la température

De façon avantageuse, les deux joints sont annulaires et accolés l'un à l'autre, le joint d'étanchéité dynamique étant situé autour du joint d'étanchéité statique.

Préférentiellement, les segments métalliques sont annulaires, et sont décalés l'un par rapport à l'autre, suivant l'axe du piston, lesdits segments enserrant les deux joints. Autrement dit, l'axe suivant lequel sont décalés les deux joints et l'axe suivant lequel sont décalés les deux segments sont perpendiculaires. Les segments sont élaborés à partir d'une technologie connue, et possèdent une ligne de rupture leur permettant d'être écartés pour être montés autour du piston.

Avantageusement, les segments sont plans et de faible épaisseur, et ils sont situés dans deux plans transversaux par rapport à l'axe du piston. De cette manière, les deux segments métalliques annulaires sont parallèles entre eux.

De façon préférentielle, les segments sont positionnés au contact du joint externe d'étanchéité dynamique. Ledit joint externe est destiné à venir se plaquer contre la paroi interne du cylindre.

De façon avantageuse, le joint d'étanchéité statique est un joint torique venant en appui à la fois contre le joint d'étanchéité dynamique et contre la paroi externe du piston, ou plus exactement contre le fond d'une gorge dudit piston, dans laquelle est positionné le système d'étanchéité. De cette manière, lorsque le piston est monté dans le cylindre, le joint d'étanchéité statique contribue à la déformation du joint d'étanchéité dynamique.

Selon un premier mode de réalisation préféré de l'invention, le dispositif d'étanchéité est constitué par un premier segment indépendant et par le système d'étanchéité monobloc. Pour cette configuration, le premier segment indépendant représente le segment traditionnel dit « coupe feu », qui est destiné à arrêter les flux thermiques et la pression en provenance de la chambre de combustion, le système d'étanchéité monobloc remplaçant les deux autres segments traditionnels, conçus pour assurer une bonne étanchéité et une fonction de raclage de l'huile présente sur le cylindre. Le premier segment permet ainsi de réduire, voire d'annuler, les contraintes issues de la chambre de combustion, et qui pourraient s'exercer sur le système d'étanchéité.

Selon un deuxième mode de réalisation préféré de l'invention, le dispositif d'étanchéité est uniquement constitué par le système d'étanchéité monobloc placée dans une première gorge annulaire du piston. Pour cette configuration, le système d'étanchéité monobloc assure les trois fonctions habituelles des segments traditionnels, à savoir, interruption de la pression et des flux thermiques, étanchéité et raclage de l'huile.

Avantageusement, le piston renferme une cavité annulaire placée à l'arrière de ladite première gorge, de sorte que ladite cavité et ladite première gorge soient concentriques, ladite cavité étant inscrite dans la première gorge, et étant alimentée avec un liquide de refroidissement. En effet, puisque le système d'étanchéité monobloc est exposé aux flux thermiques en provenance de la chambre de combustion, il a tendance à chauffer et donc à se dilater, perdant ainsi une partie de ses propriétés d'étanchéité. Il est donc nécessaire de le refroidir de façon régulière, voire permanente, au moyen d'un liquide de refroidissement à basse température ou à température ambiante.

De façon préférentielle, la cavité et la première gorge sont séparées par une paroi possédant plusieurs orifices de communication, ladite cavité étant reliée à un circuit de refroidissement. Autrement dit, la cavité dans laquelle circule le liquide de refroidissement, assure le refroidissement du système d'étanchéité monobloc, d'une part, par conduction thermique à travers la paroi, et, d'autre part, par contact direct avec ledit liquide au moyen desdits orifices de communication.

Préférentiellement, le liquide de refroidissement est constitué par de l'huile.

Avantageusement, le piston comprend une deuxième gorge, située sur sa surface externe, ladite deuxième gorge étant reliée à l'intérieur du piston au moyen de canaux. Cette deuxième gorge, est destinée à collecter puis évacuer l'huile raclée par le système d'étanchéité.

De façon préférentielle, le système annulaire monobloc est maintenu autour du piston au moyen d'une pièce support annulaire monobloc, comprenant la première gorge et la cavité, séparées par une paroi possédant plusieurs orifices de communication.

Préférentiellement, le piston est fabriqué par coulée, ladite pièce support étant insérée autour dudit piston lors de la coulée, et en ce que les canaux permettant l'alimentation de la cavité en liquide de refroidissement, sont percés une fois que ladite pièce a été incluse dans le piston.

L'invention porte également sur un moteur à combustion interne comprenant des pistons conformes à l'invention.

Les pistons selon l'invention comprenant un système d'étanchéité monobloc constitué de plusieurs matériaux, présentent l'avantage de pouvoir posséder un dispositif d'étanchéité aux caractéristiques multiples, en raison du nombre élevé de combinaisons de matériaux variés pouvant constituer ledit système. De plus, ledit système d'étanchéité monobloc remplaçant avantageusement deux ou trois segments traditionnels, tend vers une simplification de conception desdits pistons.

On donne ci-après une description détaillée de deux modes de réalisation préférés de pistons selon l'invention en se référant aux figures 1 à 4.
- La figure 1 est une vue en coupe transversale d'un système d'étanchéité monobloc porté par un piston selon l'invention.
- La figure 2 est une vue en coupe longitudinale d'un premier mode de réalisation préféré d'un piston selon l'invention.
- La figure 3 est une vue en coupe longitudinale d'un deuxième mode de réalisation préféré d'un piston selon l'invention.
- La figure 4 est une vue en coupe transversale d'une pièce support annulaire utilisée sur le piston de la figure 3

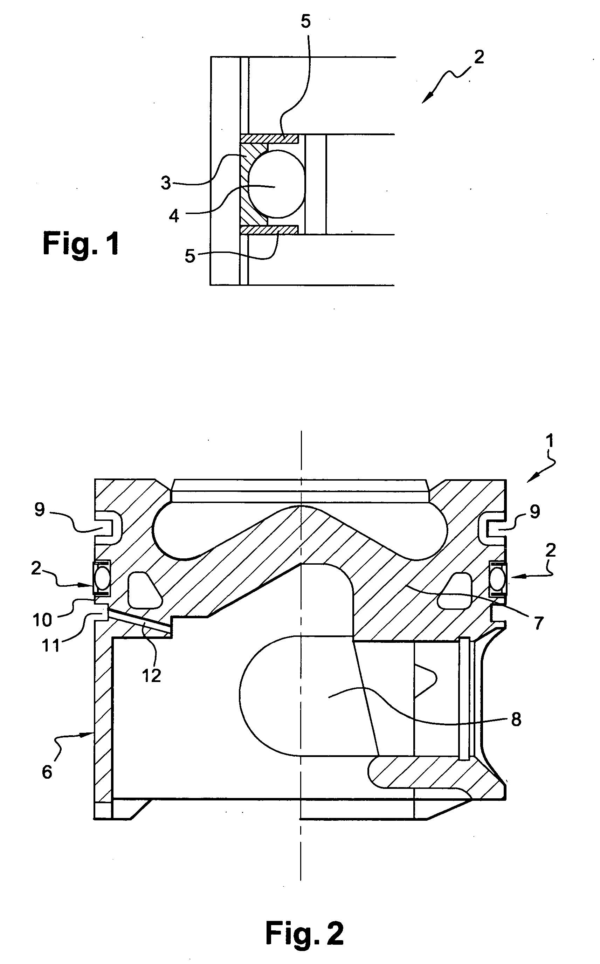

En se référant à la figure 1, un piston selon l'invention, possède un dispositif d'étanchéité comprenant un système 2 d'étanchéité annulaire et monobloc, constitué par un premier joint 3 d'étanchéité dynamique placé au contact d'un deuxième joint 4 d'étanchéité statique, ces deux joints 3,4 étant placés entre deux segments 5 métalliques de maintien. Le deuxième joint 4, qui est, par exemple, en élastomère de type hydrocarbure fluoré, est un joint torique supportant de fortes déformations, et, possédant une section arrondie. Le premier joint 3, qui est, par exemple, en polymère, est déformable et est placé autour du premier joint 4. De cette manière, lesdits joints 3,4 sont concentriques et sont accolés l'un à l'autre. Les deux segments métalliques 5, qui sont en fonte, encadrent les deux joints 3,4. Ils sont plans, annulaires et de faible épaisseur, et sont parfaitement alignés l'un sur l'autre. Ils définissent deux pistes annulaires parallèles entre elles. Lesdits segments 5 sont décalés l'un par rapport à l'autre, suivant une direction qui est perpendiculaire à la direction suivant laquelle sont décalés les deux joints 3,4. Les deux joints 3,4 et les deux segments 5 forment ainsi un système 2 d'étanchéité, annulaire et monobloc. De par leur propriété élastique, les deux joints 3,4 sont étirés pour être enfilés autour du piston. Les segments 5 en fonte possèdent une ligne de rupture, leur permettant d'être écartés pour être implantés autour du piston.

En se référant à la figure 2, un premier mode de réalisation préféré d'un piston 1 selon l'invention, comprend un corps 6 cylindrique présentant une partie supérieure 7 pleine et une partie inférieure 8 creuse. Pour cette configuration, le dispositif d'étanchéité est constitué par un segment traditionnel et le système 2 d'étanchéité monobloc ci-avant décrit. La partie supérieure 7 comprend deux gorges 9,10 annulaires, la première 9 étant destinée à loger le segment traditionnel, dont la fonction est de stopper la pression et le flux thermique en provenance de la chambre de combustion, et la deuxième gorge 10 étant destinée à recevoir le système 2 d'étanchéité monobloc, dont les deux fonctions sont d'assurer une bonne étanchéité ainsi que le raclage de l'huile présente sur le cylindre. En effet, lorsque le piston 1 est monté dans le cylindre, il définit une chambre de combustion dans laquelle se produit une combustion, et le segment traditionnel est positionné sur ledit piston 1, entre ladite chambre et le système 2 d'étanchéité monobloc. De cette manière, ledit segment traditionnel préserve le système 2 d'étanchéité de toutes sollicitations thermique et de pression, en provenance de la chambre. Le système 2 d'étanchéité monobloc est monté sur le piston 1, de manière à ce que les segments 5 soient décalés suivant l'axe du piston 1, et les joints 3,4 soient décalés suivant une direction radiale par rapport audit axe. Le joint 4 d'étanchéité statique se retrouve en butée à la fois contre le fond de la deuxième gorge 10 du piston 1, et le joint 3 d'étanchéité dynamique, qui, lui, est repoussé contre la paroi interne du cylindre. La partie supérieure 7 du corps 6 du piston 1 possède une troisième gorge 11 placée de l'autre coté de la première gorge 9 par rapport à la deuxième gorge 10, ladite troisième gorge 11 étant reliée à la partie inférieure 8 creuse au moyen d'un canal 12 de liaison. Cette troisième gorge 11 est destinée à recueillir l'huile raclée par le système 2 d'étanchéité monobloc, pour ensuite l'évacuer vers l'intérieur du piston 1.

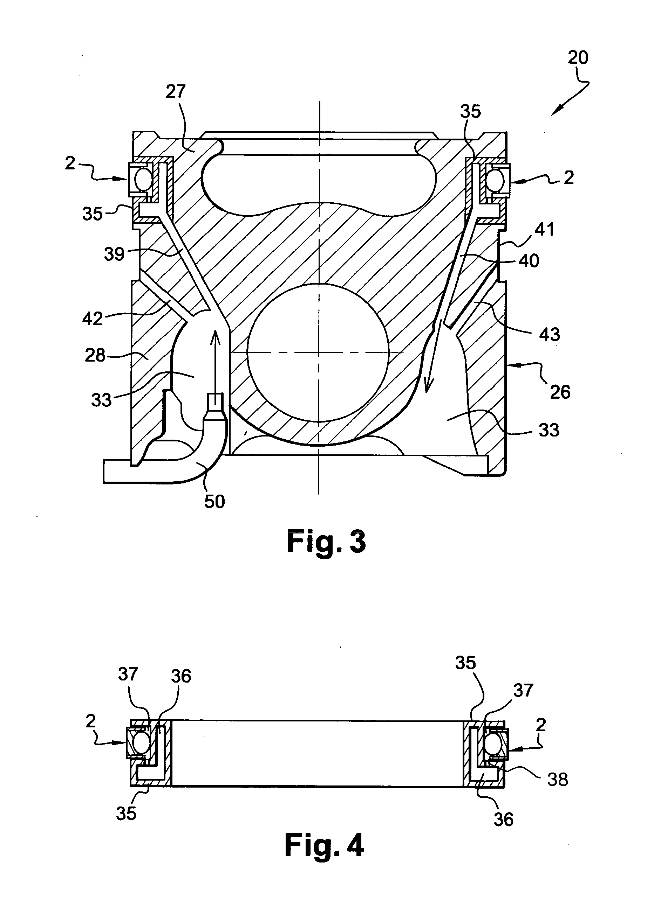

En se référant à la figure 3, un deuxième mode de réalisation préféré d'un piston 20 selon l'invention, comprend un corps 26 cylindrique présentant une partie supérieure 27 et une partie inférieure 28 dans laquelle est placé un circuit 33,39,40 de refroidissement en huile possédant un organe 50 d'alimentation. Pour cette configuration, le dispositif d'étanchéité du piston 20 est uniquement constitué par le système 2 d'étanchéité monobloc, précédemment décrit. Une pièce support 35 annulaire, qui a été insérée dans la partie supérieure 27 du piston 20 au moment de la fabrication dudit piston 20 par coulée, est destinée à recevoir le système 2 d'étanchéité monobloc. En se référant à la figure 4, la pièce support 35 est monobloc et de fabrication autonome, et dispose d'une section rectangulaire permettant de distinguer deux compartiments 36,37, l'un 36 ayant une section en forme de L, et l'autre 37 ayant une section rectangulaire complémentaire, de manière à former une section résultante rectangulaire. De cette manière, cette pièce support 35 comprend une première gorge 37 de section rectangulaire destinée a recevoir le système d'étanchéité 2 et une cavité 36 destinée a recevoir le fluide de refroidissement dont la section est en forme de L. La cavité 36 possède un premier tronçon annulaire dont l'axe de la section est parallèle à l'axe du piston 20, et un deuxième tronçon annulaire dont l'axe de la section est situé selon une direction radiale par rapport à l'axe du piston 20, l'extrémité de ladite section affleurant la surface latérale externe de la partie supérieure 27 du corps 26 du piston 20. La première gorge 37 entoure le premier tronçon de la cavité 36. La cavité 36 et la première gorge 37 sont séparées par une paroi possédant plusieurs orifices 38 de communication. La cavité 36 est reliée au circuit 33,39,40 de refroidissement en huile, au moyen de deux canaux 39,40 de liaison, percés à la fois à travers la paroi externe de la cavité 36 et dans le piston 20, l'un 39 des deux canaux assurant l'alimentation en huile de la cavité 36, l'autre canal 40 assurant l'évacuation de l'huile. Le système 2 d'étanchéité monobloc étant logé dans la première gorge 37, cette circulation en huile dans la cavité 36, a pour effet de refroidir le système 2 d'étanchéité placée dans la première gorge 37. Les orifices 38 de communication permettent à une fraction de l'huile circulant dans la cavité 36, de passer directement dans la première gorge 37 pour accroitre le refroidissement du système 2 d'étanchéité. Le piston 20 est muni d'une deuxième gorge 41, située sur sa surface externe, ladite deuxième gorge 41 étant reliée à l'intérieur du piston 20 au moyen de canaux 42,43. Cette troisième gorge 41 permet de collecter l'huile raclée par le système 2, pour ensuite l'évacuer vers le centre du piston 20.

## Revendications

1. Piston (1,20) destiné à coulisser de façon alternative dans un cylindre de moteur à combustion interne de véhicule automobile, ledit piston (1,20) possédant un dispositif d'étanchéité comprenant au moins un segment, **caractérisé en ce que** ledit dispositif comprend un joint (3) d'étanchéité dynamique coopérant avec un joint (4) d'étanchéité statique, ces deux joints (3,4) étant non métalliques et étant placés entre deux segments (5) métalliques de maintien, de sorte que lesdits joints (3,4) et lesdits segments (5) forment un système (2) d'étanchéité, annulaire et monobloc.

2. Piston (1,20) selon la revendication 1, **caractérisé en ce que** les deux joints (3,4) sont annulaires et accolés l'un à l'autre, le joint d'étanchéité dynamique (3) étant situé autour du joint (4) d'étanchéité statique.

3. Piston (1,20) selon la revendication 2, **caractérisé en ce que** les segments (5) métalliques sont annulaires, et sont décalés l'un par rapport à l'autre, suivant l'axe du piston (1,20), et **en ce qu'**ils enserrent les deux joints (3,4).

4. Piston (1,20) selon la revendication 3, **caractérisé en ce que** les segments (5) sont plans et de faible épaisseur, et **en ce qu'**ils sont situés dans deux plans transversaux par rapport à l'axe du piston (1,20).

5. Piston (1,20) selon la revendication 4, **caractérisé en ce que** les segments (5) sont positionnés au contact du joint (3) externe d'étanchéité dynamique.

6. Piston (1,20) selon l'une quelconque des revendications 2 à 5, **caractérisé en ce que** le joint (4) d'étanchéité statique est un joint torique venant en appui à la fois contre le joint (3) d'étanchéité dynamique et contre la paroi externe du piston (1,20).

7. Piston (1,20) selon la revendication 1, **caractérisé en ce que** le joint (3) d'étanchéité dynamique est en polymère et le joint (4) d'étanchéité statique est en élastomère de type hydrocarbure fluoré.

8. Piston (1) selon l'une quelconque des revendications précédentes, **caractérisé en ce que** le dispositif d'étanchéité est constitué par un premier segment indépendant et par le système (2) d'étanchéité monobloc.

9. Piston (20) selon l'une quelconque des revendications 1 à 7, **caractérisé en ce que** le dispositif d'étanchéité est uniquement constitué par le système (2) d'étanchéité monobloc placé dans une première gorge annulaire (37) du piston (20).

10. Piston (20) selon la revendication 9, **caractérisé en ce que** le piston (20) renferme une cavité (36) annulaire placée à l'arrière de ladite première gorge (37), de sorte que ladite cavité (36) et ladite première gorge (37) soient concentriques, ladite cavité (36) étant inscrite dans la première gorge (37), et destinée à être alimentée avec un liquide de refroidissement.

11. Piston (20) selon la revendication 10, **caractérisé en ce que** la cavité (36) et la première gorge (37) sont séparées par une paroi possédant plusieurs orifices (38) de communication, ladite cavité (36) étant reliée à un circuit de refroidissement (33,39,40).

12. Piston (20) selon l'une quelconque des revendications 10 ou 11, **caractérisé en ce qu'**en opération le liquide de refroidissement est constitué par de l'huile.

13. Piston (20) selon la revendication 12, **caractérisé en ce qu'**il comprend une deuxième gorge (41) située sur sa surface externe, ladite deuxième gorge (41) étant reliée à l'intérieur du piston, au moyen de canaux (42,43).

14. Piston (20) selon l'une quelconque des revendications 9 à 13, **caractérisé en ce que** le système (2) annulaire monobloc est maintenu autour du piston (20) au moyen d'une pièce (35) support annulaire monobloc, comprenant la première gorge (37) et la cavité (36) séparées par une paroi possédant plusieurs orifices (38) de communication.

15. Piston (20) selon la revendication 14, **caractérisé en ce que** le piston est fabriqué par coulée, ladite pièce support (35) étant insérée autour dudit piston (20) lors de la coulée, et **en ce que** les canaux (39,40) permettant l'alimentation de la cavité (36) en liquide de refroidissement, sont percés une fois que ladite pièce (35) a été incluse dans le piston (20).

16. Moteur à combustion interne d'un véhicule automobile, **caractérisé en ce qu'**il comporte des pistons conformes à l'une quelconque des revendications précédentes.

## Claims

1. Piston (1, 20) intended to slide in a reciprocating manner in a cylinder of an internal combustion engine of an automobile vehicle, the said piston (1, 20) having a tightness device comprising at least one segment, **characterized in that** the said device comprises a dynamic tightness joint (3) cooperating with a static tightness joint (4), these two joints (3, 4) being non-metallic and being placed between two metallic support segments (5), such that the said joints (3, 4) and the said segments (5) form an annular and monoblock tightness system (2).

2. Piston (1, 20) according to Claim 1, **characterized in that** the two joints (3, 4) are annular and coupled to each other, the dynamic tightness joint (3) being situated around the static tightness joint (4).

3. Piston (1, 20) according to Claim 2, **characterized in that** the metallic segments (5) are annular and are staggered one with respect to the other, following the axis of the piston (1, 20), and **in that** they enclose the two joints (3, 4).

4. Piston (1, 20) according to Claim 3, **characterized in that** the segments (5) are flat and of low weight, and **in that** they are situated in two transverse planes with respect to the axis of the piston (1, 20).

5. Piston (1, 20) according to Claim 4, **characterized in that** the segments (5) are positioned in contact with the external dynamic tightness joint (3).

6. Piston (1, 20) according to any of Claims 2 to 5, **characterized in that** the static tightness joint (4) is a toric joint coming to bear both against the dynamic tightness joint (3) and against the external wall of the piston (1, 20).

7. Piston (1, 20) according to Claim 1, **characterized in that** the dynamic tightness joint (3) is made of polymer and the static tightness joint (4) is made of elastomer of the hydrofluorocarbon type.

8. Piston (1) according to any of the preceding claims, **characterized in that** the tightness device is constituted by a first independent segment and by the monoblock tightness system (2).

9. Piston (20) according to any of Claims 1 to 7, **characterized in that** the tightness device is solely constituted by the monoblock tightness system (2) placed in a first annular groove (37) of the piston (20) .

10. Piston (20) according to Claim 9, **characterized in that** the piston (20) encloses an annular cavity (36) placed at the rear of the said first groove (37), such that the said cavity (36) and the said first groove (37) are concentric, the said cavity (36) being enclosed in the first groove (37), and intended to be supplied with a cooling liquid.

11. Piston (20) according to Claim 10, **characterized in that** the cavity (36) and the first groove (37) are separated by a wall having several communication orifices (38), the said cavity (36) being connected to a cooling circuit (33, 39, 40).

12. Piston (20) according to any of Claims 10 or 11, **characterized in that** in operation the cooling liquid is constituted by oil.

13. Piston (20) according to Claim 12, **characterized in that** it comprises a second groove (41) situated on its external surface, the said second groove (41) being connected to the interior of the piston, by means of ducts (42, 43).

14. Piston (20) according to any of Claims 9 to 13, **characterized in that** the monoblock annular system (2) is supported around the piston (20) by means of an annular monoblock support piece (35), comprising the first groove (37) and the cavity (36) separated by a wall having several communication orifices (38).

15. Piston (20) according to Claim 14, **characterized in that** the piston is manufactured by casting, the said support piece (35) being inserted around the said piston (20) on casting and **in that** the ducts (39, 40) allowing the supply of the cavity (36) with cooling liquid, are pierced once the said piece (35) has been included in the piston (20).

16. Internal combustion engine of an automobile vehicle, **characterized in that** it comprises pistons according to any of the preceding claims.

## Patentansprüche

1. Kolben (1, 20), der dazu bestimmt ist, in einem Zylinder eines Verbrennungsmotors eines Kraftfahrzeugs zu hin und her zu gleiten, wobei der Kolben (1, 20) eine Abdichtvorrichtung aufweist, die mindestens einen Ring aufweist, **dadurch gekennzeichnet, dass** die Vorrichtung eine Bewegungsdichtung (3) aufweist, die mit einer statischen Dichtung (4) zusammenwirkt, wobei diese zwei Dichtungen (3, 4) nicht metallisch sind und derart zwischen zwei metallischen Halteringen (5 platziert sind, dass die Dichtungen (3, 4) und die Ringe (5) ein ringförmiges und einstückiges Dichtsystem (2) bilden.

2. Kolben (1, 20) nach Anspruch 1, **dadurch gekennzeichnet, dass** die zwei Dichtungen (3, 4) ringförmig und aneinander gefügt sind, und wobei die Bewegungsdichtung (3) um die statische Dichtung (4) liegt.

3. Kolben (1, 20) nach Anspruch 2, **dadurch gekennzeichnet, dass** die metallischen Ringe (5) kreisförmig und zueinander entlang der Achse des Kolbens (1, 20) versetzt sind und dass sie die zwei Dichtungen (3, 4) einschließen.

4. Kolben (1, 20) nach Anspruch 3, **dadurch gekennzeichnet, dass** die Ringe (5) flach sind und geringe Stärke haben, und dass sie in zwei Querebenen in Bezug zu der Achse des Kolbens (1, 20) liegen.

5. Kolben (1, 20) nach Anspruch 4, **dadurch gekennzeichnet, dass** die Ringe (5) in Berührung mit der externen Bewegungsdichtung (3) positioniert sind.

6. Kolben (1, 20) nach einem der Ansprüche 2 bis 5, **dadurch gekennzeichnet, dass** die statische Dichtung (4) eine O-Ring-Dichtung ist, die gleichzeitig gegen die Bewegungsdichtung (3) und gegen die äußere Wand des Kolbens (1, 20) zum Aufliegen kommt.

7. Kolben (1, 20) nach Anspruch 1, **dadurch gekennzeichnet, dass** die Bewegungsdichtung (3) aus Polymer besteht, und dass die statische Dichtung (4) aus einem Elastomer des Typs fluorhaltiger Kohlenwasserstoff besteht.

8. Kolben (1) nach einem der vorhergehenden Ansprüche, **dadurch gekennzeichnet, dass** die Dichtvorrichtung aus einem ersten unabhängigen Ring und aus dem einstückigen Dichtsystem (2) besteht.

9. Kolben (20) nach einem der Ansprüche 1 bis 7, **dadurch gekennzeichnet, dass** die Dichtvorrichtung nur aus dem einstückigen Dichtsystem (2) besteht, das in eine erste ringförmige Hohlkehle (37) des Kolbens (20) platziert ist.

10. Kolben (20) nach Anspruch 9, **dadurch gekennzeichnet, dass** der Kolben (20) einen ringförmigen Hohlraum (36) einschließt, der hinter der ersten Hohlkehle (37) platziert ist, so dass der Hohlraum (36) und die erste Hohlkehle (37) konzentrisch sind, wobei der Hohlraum (36) in die erste Hohlkehle (37) fällt und dazu bestimmt ist, mit einer Kühlflüssigkeit versorgt zu werden.

11. Kolben (20) nach Anspruch 10, **dadurch gekennzeichnet, dass** der Hohlraum (36) und die erste Hohlkehle (37) durch eine Wand getrennt sind, die mehrere Kommunikationsöffnungen (38) besitzt, wobei der Hohlraum (36) mit einem Kühlkreislauf (33, 39, 40) verbunden ist.

12. Kolben (20) nach einem der Ansprüche 10 oder 11, **dadurch gekennzeichnet, dass** die Kühlflüssigkeit beim Betrieb aus Öl besteht.

13. Kolben (20) nach Anspruch 12, **dadurch gekennzeichnet, dass** er eine zweite Hohlkehle (41) aufweist, die auf seiner Außenfläche liegt, wobei die zweite Hohlkehle (41) mit dem Inneren des Kolbens mittels Kanälen (42, 43) verbunden ist.

14. Kolben (20) nach einem der Ansprüche 9 bis 13, **dadurch gekennzeichnet, dass** das einstückige ringförmige System (2) um den Kolben (20) mittels eines einstückigen ringförmigen Tragteils (35) gehalten wird, der die erste Hohlkehle (37) und die Hohlkehle (36) aufweist, die durch eine Wand getrennt sind, die mehrere Kommunikationsöffnungen (38) aufweist.

15. Kolben (20) nach Anspruch 14, **dadurch gekennzeichnet, dass** der Kolben durch Gießen hergestellt ist, wobei der Tragteil (35) um den Kolben (20) bei dem Gießen eingefügt wird, und dass die Kanäle (39, 40), die das Versorgen des Hohlraums (36) mit Kühlflüssigkeit erlauben, durchbohrt werden, sobald der Teil (35) in dem Kolben (20) enthalten ist.

16. Verbrennungsmotor eines Kraftfahrzeugs, **dadurch gekennzeichnet, dass** er Kolben nach einem der vorhergehenden Ansprüche aufweist.
